# FASCICULE DE BREVET EUROPEEN

(11) **EP 1 450 184 B1**
(45) Date de publication et mention de la délivrance du brevet: **05.01.2011**
(21) Numéro de dépôt: 04290403.7
(22) Date de dépôt: 13.02.2004
(51) Int. Cl.: G02B 6/00

(54) **Dispositif d'éclairage comportant un guide de lumière et un projecteur**
Beleuchtungsvorrichtung mit Lichtleiter und Projektor
Illumination device with lightguide and projector

(30) Priorité: 21.02.2003 FR 0302204
(43) Date de publication de la demande: 25.08.2004
(73) Titulaire: VALEO VISION, 93012 Bobigny Cedex (FR)
(72) Inventeur: de Lamberterie, Antoine, 75019 Paris (FR); Dubosc, Christophe, 93250 Villemomble (FR)

(56) Documents cités:
- EP-A- 1 043 542
- EP-A- 1 078 816
- US-A- 5 987 199

## Description

L'invention concerne un dispositif d'éclairage ou de signalisation, notamment pour véhicule automobile, qui comprend un guide de lumière.

L'invention concerne plus particulièrement un dispositif d'éclairage ou de signalisation, notamment pour un véhicule automobile, comprenant :
- un guide de lumière linéaire et transparent qui est engendré par le déplacement d'une section élémentaire transversale verticale globalement circulaire selon une ligne directrice, du type dans lequel le contour de la section élémentaire comprend une portion périphérique arrière à partir de laquelle s'étend un axe optique transversal qui traverse diamétralement la section élémentaire jusqu'à une portion périphérique avant d'éclairage, et dans lequel le déplacement de la portion périphérique arrière forme une face périphérique arrière, et le déplacement de la portion périphérique avant forme une face périphérique avant ;
- une source lumineuse principale qui émet des rayons lumineux dans le guide de lumière à travers au moins une face transversale d'extrémité du guide de lumière ;
   du type dans lequel les rayons lumineux se propagent dans le guide de lumière par réflexions totales successives sur le contour selon la direction générale de la ligne directrice.

Il est courant de rassembler dans un seul boîtier plusieurs fonctions d'éclairage ou de signalisation du véhicule automobile, de manière à simplifier le câblage électrique de ces différentes fonctions.

Chaque fonction comporte une source lumineuse, un réflecteur et éventuellement une glace, ces différents éléments étant agencés de façon à fournir un faisceau d'éclairage ou de signalisation dont les caractéristiques géométriques et photométriques doivent être conformes à différentes réglementations. Chaque fonction nécessite ainsi un volume minimal pour son implantation dans un dispositif d'éclairage ou de signalisation particulier.

Cependant, le volume disponible pour implanter des dispositifs d'éclairage ou de signalisation est de plus en plus réduit, aussi bien à l'avant qu'à l'arrière du véhicule automobile. En effet, les contraintes de l'aérodynamique et les conceptions des stylistes conduisent à des formes très différentes de celles qui résultent uniquement des considérations techniques.

Ainsi, dans de nombreux cas, l'espace disponible pour regrouper des fonctions dans un même boîtier est insuffisant, et il est alors nécessaire de répartir les différentes fonctions dans des boîtiers différents, ce qui a pour conséquences un accroissement du coût et une augmentation du temps de câblage et de montage.

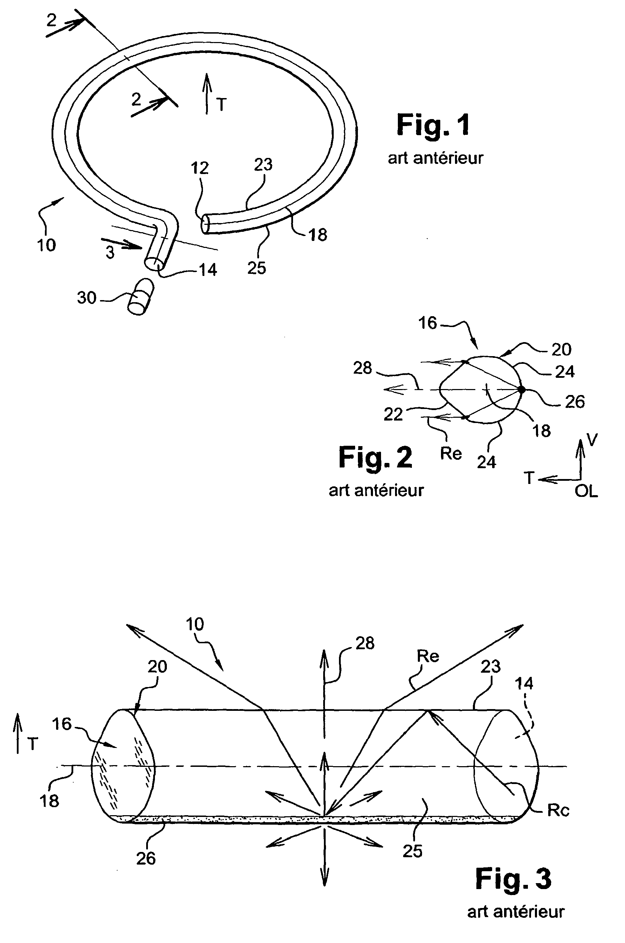

Afin de résoudre ce problème, il est connu d'utiliser des guides de lumière. Un tel guide de lumière réalisé selon l'état de la technique est représenté aux figures 1 à 3.

Le guide de lumière 10 comporte ici deux extrémités 12 et 14. Le guide de lumière 10 est notamment destiné à canaliser des rayons lumineux qui pénètrent par au moins une de ses extrémités 12 ou 14.

Le guide de lumière 10 est obtenu par le déplacement d'une section élémentaire 16 transversale verticale globalement circulaire le long d'une ligne directrice 18. La ligne directrice 18 est ici située sensiblement au centre de la section élémentaire 16, comme illustré à la figure 2, et la section élémentaire 16 est perpendiculaire à la ligne directrice 18.

La forme de la ligne directrice 18 est définie librement par l'homme du métier notamment en fonction des contraintes esthétiques. Comme représenté à la figure 1, la ligne directrice 18 a ici une forme de boucle.

Dans la description qui va suivre, on adoptera, à titre non limitatif, une orientation longitudinale, verticale et transversale qui est indiquée par le trièdre L, V, T des figures 2, 5 et 7, et qui s'appliquera localement à toutes les sections élémentaires 16 du guide de lumière 10. Ainsi la direction longitudinale L est toujours perpendiculaire à chacune des sections élémentaires 16, quelle que soit la forme globale du guide de lumière 10. La direction longitudinale L est donc définie comme étant la tangente à la ligne directrice 18 à l'intersection avec la section élémentaire 16 considérée. Ainsi, la direction verticale V telle que définie est susceptible de varier en fonction de la forme de la ligne directrice 18, par rapport à un référentiel lié par exemple au véhicule automobile.

Par convention, la direction transversale T est orientée de l'arrière, à droite des figures 2, 5 et 7, vers l'avant à gauche des figures 2, 5 et 7. Dans les exemples représentés aux figures, la direction transversale T est fixe par rapport à un référentiel lié au véhicule automobile, et elle est indiquée par la flèche T des figures.

Comme illustré à la figure 2, le contour 20 de la section élémentaire 16 comporte une portion périphérique avant 22 d'éclairage, et une portion périphérique arrière 24.

La portion périphérique arrière 24 comporte un segment arrière 26 de diffusion de la lumière. La longueur du segment arrière 26 étant petite par rapport au diamètre de la section élémentaire 16, le segment arrière 26 sera considéré comme un point dans la suite de la description. Un axe optique principal 28 transversal s'étend diamétralement à travers la section 16 depuis le segment arrière de diffusion 26 jusqu'à la portion avant d'éclairage 22.

L'ensemble des segments arrières de diffusion 26 crée une ligne arrière 26 de diffusion de la lumière qui s'étend parallèlement à la ligne directrice 18 sur au moins un tronçon, dit « de diffusion », du guide de lumière 10. Un tel tronçon est représenté à la figure 3.

De même, l'ensemble des portion périphériques arrières 24 forme une face arrière 25 du tronçon, et l'ensemble des portions périphériques avant 22 forme une face avant 23.

La portion avant d'éclairage 22 est destinée à réaliser la fonction d'éclairage ou de signalisation requise pour le véhicule automobile. A cette fin, la portion avant d'éclairage 22 a la forme d'un dioptre dont le foyer objet principal 26a est agencé sur le segment de diffusion 26 afin de réfracter une partie Re des rayons diffusés vers l'avant et de manière parallèle à l'axe optique 28. La pluralité des sections 16 crée une ligne de foyers objets principaux 26a qui est ici confondue avec la ligne de diffusion 26.

Les rayons lumineux pénètrent dans le guide de lumière 10 par au moins une de ses extrémités 12 ou 14. Les rayons lumineux sont ici émis par une source lumineuse, par exemple une diode électroluminescente 30, aussi appelée « LED », qui est située en regard de l'extrémité 14.

Afin de canaliser la lumière, le guide de lumière 10 est constitué d'une matière transparente telle que du verre ou du plastique, qui a un indice de réfraction plus élevé que le milieu dans lequel est immergé le guide de lumière 10, notamment l'air.

Comme représenté à la figure 3, les rayons lumineux Rc pénétrant par l'extrémité 14 du guide de lumière 10 sont canalisés à l'intérieur du guide de lumière 10 par des réflexions totales successives sur le contour 20 des sections élémentaires 16, qui sont dues à la différence d'indices de réfraction entre l'air et le guide de lumière 10, selon la direction générale de la ligne directrice 18.

Lorsque ces rayons canalisés Rc atteignent le segment arrière 26 de diffusion, ils sont diffusés dans toutes les directions et notamment vers l'avant à l'intérieur du guide de lumière 10.

Les rayons lumineux Re diffusés vers l'avant qui sont compris dans un angle solide déterminé autour de l'axe optique principal 28 atteignent la portion avant d'éclairage 22 du guide de lumière 10 avec un angle d'incidence tel qu'ils sont réfractés, et qu'ils émergent ainsi à l'extérieur du guide de lumière 10.

La portion avant d'éclairage 22 réalise ainsi la fonction d'éclairage ou de signalisation requise pour le véhicule automobile.

Un tel guide de lumière 10 permet de réaliser une fonction d'éclairage ou de signalisation répondant aux contraintes de style et d'encombrement du véhicule.

Cependant, la lumière qui est fournie par une ou deux diodes 30, et qui est projetée vers l'avant par le guide de lumière 10 n'a pas une intensité suffisante pour remplir les conditions réglementaires de certaines fonctions d'éclairage ou de signalisation.

Un tel système est connu par exemple du documment EP 1078816. Afin de remédier à ces problèmes, l'invention propose un dispositif d'éclairage ou de signalisation du type décrit précédemment **caractérisé en ce qu**'il comporte au moins une source lumineuse secondaire qui est située en regard de la face périphérique arrière selon l'axe optique à l'arrière d'un tronçon associé du guide de lumière, et qui émet des rayons lumineux vers l'avant de manière qu'ils pénètrent dans le tronçon par sa face périphérique arrière, et de manière que les rayons lumineux émergent du tronçon par sa face périphérique avant selon la direction moyenne de l'axe optique.

Selon d'autres caractéristiques de l'invention :
- face périphérique avant du tronçon a une forme telle que les rayons lumineux issus de la source secondaire émergent par la face périphérique avant du tronçon de façon globalement parallèle à l'axe optique ;
- portion périphérique avant de la section élémentaire a la forme d'un dioptre qui comporte un foyer objet principal agencé sensiblement sur chaque axe optique, le déplacement de la section élémentaire engendrant une ligne de foyers objets principaux s'étendant dans le tronçon parallèlement à la ligne directrice ; et en ce que le dispositif d'éclairage ou de signalisation comporte un système de concentration des rayons lumineux issus de la source secondaire vers la ligne de foyers objets principaux ;
- le système de concentration comporte un réflecteur de profil transversal globalement ellipsoïdal dont le foyer objet est agencé à la source secondaire et dont le foyer image est agencé au foyer objet principal de la section élémentaire associée ;
- le système de concentration comporte un dioptre arrière qui est agencé entre la source lumineuse secondaire et le foyer objet principal, et qui concentre les rayons lumineux issus de la source lumineuse secondaire sur la ligne de foyers objets principaux ;
- le réflecteur a un profil longitudinal formant globalement une parabole dont le foyer objet est agencé à la source lumineuse secondaire et qui réfléchit vers l'avant les rayons lumineux émis par la source lumineuse secondaire de façon globalement parallèle à l'axe optique ;
- le foyer objet principal est agencé sensiblement sur la portion périphérique arrière de la section élémentaire ;
- le système de concentration est réalisé venu de matière avec le guide de lumière ;
- la face périphérique arrière du tronçon comporte un logement qui reçoit la source secondaire de lumière ;
- la face périphérique arrière du tronçon forme le réflecteur de profil transversal vertical ellipsoïdal, et en ce que des parois inférieure et supérieure du logement ont sensiblement la forme d'un dioptre dont le centre optique est agencé à la source lumineuse secondaire de façon que des rayons lumineux issus de la source lumineuse secondaire traversent lesdites parois globalement en ligne droite ;
- le fond du logement forme le dioptre arrière.

D'autres caractéristiques et avantages de l'invention apparaîtront au cours de la lecture de la description détaillée qui va suivre, pour la compréhension de laquelle on se reportera aux dessins annexés parmi lesquels :
- la figure 1 est une vue en perspective qui représente un guide de lumière réalisé selon une conception connue ;
- la figure 2 est une vue en section selon le plan de coupe 2-2 de la figure 1 qui représente une section élémentaire transversale verticale du guide de lumière ;
- la figure 3 est une vue à grande échelle qui représente une partie du guide de lumière indiquée par la flèche 3 de la figure 1 ;
- la figure 4 est une vue de derrière qui représente un guide de lumière rectiligne équipé de deux projecteurs selon les enseignements de l'invention ;
- la figure 5 est une vue en section transversale verticale selon le plan de coupe 5-5 de la figure 4 qui représente le guide de lumière et un des projecteurs comportant une source lumineuse et un système de concentration des rayons lumineux ;
- la figure 6 est une vue en section longitudinale transversale selon le plan de coupe 6-6 de la figure 4 qui représente le guide de lumière et un des projecteurs comportant une source lumineuse et un système de concentration des rayons lumineux ;
- la figure 7 est une vue similaire à celle de la figure 5 qui représente un autre mode de réalisation de l'invention dans lequel le système de concentration du projecteur est réalisé venu de matière avec le guide de lumière ;
- la figure 8 est une vue en coupe transversale d'un tronçon du guide de lumière de la figure 7 qui n'est pas équipé de projecteur.

Dans la suite de la description, des éléments identiques, similaires ou analogues seront indiqués par les mêmes références.

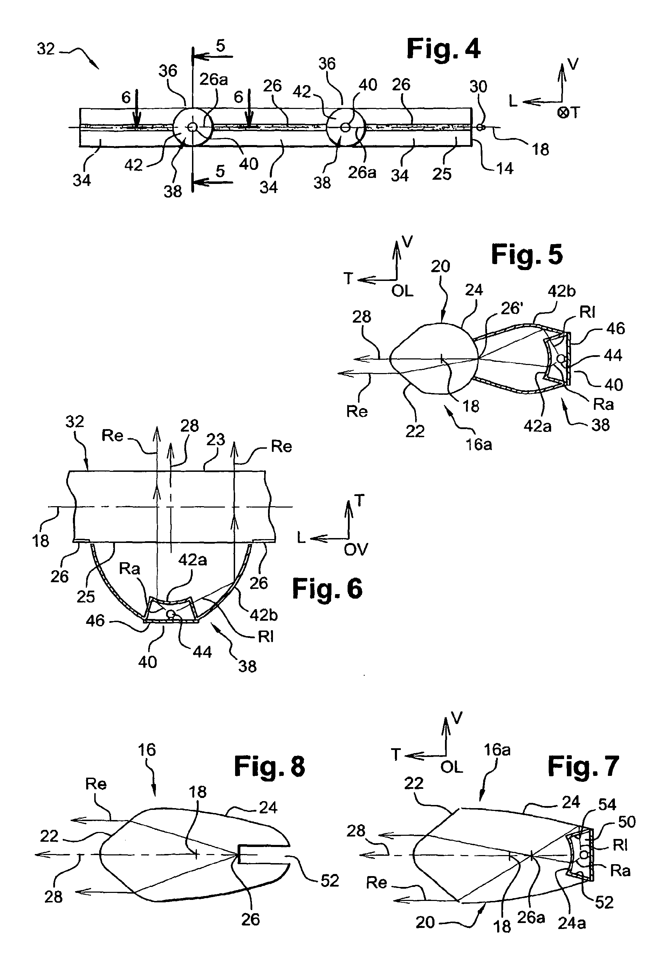

On a représenté à la figure 4, un guide de lumière 32 du même type que le guide de lumière 10 décrit en préambule de cette description. Sur l'exemple représenté à la figure 4, la ligne directrice 18 du guide de lumière 32 est globalement rectiligne.

Conformément à l'état de la technique représenté à la figure 2, le guide de lumière 32 comporte une section élémentaire transversale verticale 16 globalement circulaire, dont au moins un tronçon de diffusion 34 est équipé d'une ligne de diffusion 26. Le guide de lumière comporte ici deux tronçons de diffusion 34 latéraux et un tronçon de diffusion 34 central équipés de la ligne de diffusion 26.

Une source lumineuse, par exemple une diode 30, située à droite en regardant la figure 4, émet des rayons lumineux qui pénètrent dans le guide de lumière 32 par une face d'extrémité 14. En variante, on pourra prévoir qu'une source lumineuse soit disposée en face de chaque extrémité du guide de lumière.

Selon les enseignements de l'invention, le guide de lumière 32 comporte au moins un tronçon 36 sur lequel la ligne de diffusion 26 est interrompue. Ce tronçon sera dit «de transmission » dans la suite de la description. Dans le mode de réalisation représenté à la figure 4, le guide de lumière 32 comporte deux tronçons 36.

On a représenté à la figure 5, une section transversale verticale 16a d'un tronçon de transmission 36. La section transversale verticale 16a du tronçon de transmission 36 est identique à la section transversale verticale 16 d'un tronçon de diffusion 34 équipé d'un segment de diffusion 26, à ceci près que la section transversale verticale 16a ne comporte pas de ligne de diffusion 26. La section élémentaire 16a comporte donc globalement les mêmes éléments que ceux définis à la figure 2 en préambule de cette description, et notamment l'axe optique transversal 28 et le foyer objet principal 26a.

Selon les enseignements de l'invention, comme représenté à la figure 4, deux projecteurs 38 sont agencés en regard de la face arrière 25 selon l'axe optique 28, chacun à l'arrière d'un des tronçons de transmission 36.

Les projecteurs 38 sont destinés à produire des rayons lumineux qui traversent le guide de lumière 32 globalement transversalement et vers l'avant.

Les projecteurs 38 comportent principalement une source lumineuse secondaire 40 et un système 42 de concentration de la lumière, comme représenté à la figure 4. Les figures 5 et 6 illustrent plus en détail les projecteurs 38.

La source lumineuse 40 comporte ici une diode électroluminescente secondaire 44, aussi appelée LED, qui est portée par un support 46 vertical longitudinal. La diode secondaire 44 est disposée globalement dans le prolongement de l'axe optique 28 de la section 16a.

Le système de concentration de la lumière 42 comporte ici une lentille convergente 42a et un réflecteur 42b. Il est notamment destiné à concentrer les rayons lumineux émis par la diode secondaire 44 vers la face arrière 25 du guide de lumière 32, plus précisément vers la ligne de foyers objets principaux 26a. Ainsi, en regardant la figure 4, le système de concentration de la lumière 42 concentre les rayons lumineux émis par la diode secondaire 44 sur la face arrière 25 du tronçon de transmission 36 le long de la ligne de foyers objets principaux 26a dans le prolongement de la ligne de diffusion 26.

Dans ce mode de réalisation, la diode émet des rayons lumineux Ra sensiblement vers l'avant qui traversent la lentille 42a, et des rayons lumineux RI latéralement qui atteignent le réflecteur 42b sans traverser la lentille 42a.

La lentille 42a est agencée entre la diode secondaire 44 et la ligne de foyers objets principaux 26a.

Dans un plan vertical transversal, comme représenté à la figure 5, la lentille 42a est agencée de façon telle que les rayons lumineux Ra sont concentrés vers la ligne de foyers objets principaux 26a.

Comme illustré à la figure 6, dans un plan longitudinal transversal comprenant la ligne de foyers objets principaux 26a, ou plan méridien du guide de lumière 32, les rayons lumineux Ra sont réfractés par la lentille 42a de façon à atteindre la face arrière 25 parallèlement à l'axe optique 28 du guide de lumière 32.

Ainsi, les rayons lumineux Ra pénètrent dans le guide de lumière par sa face arrière 25, au niveau de la ligne de foyers objets principaux 26a, puis ils émergent par la face avant 23 du guide de lumière 32 de façon globalement parallèle à l'axe principal optique 28.

En regardant la section élémentaire 16a illustrée à la figure 5, le réflecteur 42b a une section transversale verticale de forme sensiblement ellipsoïdale. Le réflecteur 42b comporte donc un premier foyer qui est agencé sur la diode secondaire 44, et un second foyer qui est agencé sur la ligne de foyers objets principaux 26a. Ainsi, dans un plan transversal vertical, les rayons lumineux RI émis par la diode secondaire 44 qui atteignent le réflecteur 42b sont réfléchis par réflexion totale en direction de la ligne de foyers objets principaux 26a.

Comme illustré à la figure 6, dans un plan longitudinal transversal comprenant la ligne de foyers objets principaux 26a, ou plan méridien du guide de lumière 32, le réflecteur 42b a une section de forme sensiblement parabolique. Il comporte donc un foyer qui est agencé globalement sur la diode secondaire 44, de façon que les rayons lumineux RI sont réfléchis par réflexion totale vers l'avant de façon sensiblement parallèle à l'axe optique 28.

Dans le mode de réalisation représenté aux figures 5 et 6, la lentille 42a comporte des parois latérales arrières 48 de support transparentes formant un logement pour la diode secondaire 44, et qui sont reliés au support 46. Les parois transparentes 48 sont réalisées de manière que les rayons lumineux Rl émis par la diode les traversent sans être réfractés, c'est-à-dire en ligne droite, ou en étant peu réfractés, les rayons lumineux Rl les traversant alors sensiblement en ligne droite..

Lors du fonctionnement du dispositif d'éclairage ou de signalisation, la diode 30 émet des rayons lumineux Rc qui pénètrent dans le guide de lumière par son extrémité 14. Les rayons lumineux Rc sont canalisés dans le guide de lumière 32. Comme expliqué en préambule de cette description, une partie de ces rayons Rc est diffusée par la ligne de diffusion 26, et projetée vers l'avant à travers la face avant 23 du guide de lumière sous la forme des rayons Re comme expliqué en préambule et représenté à la figure 3.

Ainsi, un observateur situé à l'avant du guide de lumière et le regardant selon la direction transversale T voit les tronçons de diffusion 34 illuminés de manière similaire à des néons.

Lorsque les diodes secondaires 44 sont illuminées, elles émettent des rayons lumineux Ra et RI qui sont concentrés vers la ligne de foyers objets principaux 26a par le système de concentration 42. Les rayons lumineux traversent ensuite le guide lumineux en ligne droite depuis la ligne de foyers objets principaux 26a jusqu'à ce qu'ils atteignent la face avant 23, Les rayons Re sont alors réfractés par la face avant 23, et ils émergent selon une direction sensiblement transversale.

L'observateur situé devant le guide de lumière 32 observe ainsi que les tronçons de transmission 36 du guide de lumière 32 sont aussi illuminés à la façon de néons. La diode est choisie de manière que les tronçons de transmission 36 éclairent de façon plus intense que les tronçons de diffusion 34, notamment de manière que le dispositif d'éclairage ou de signalisation respecte les normes photométriques désirées.

Selon un second mode de réalisation du dispositif d'éclairage ou de signalisation représenté à la figure 7, le système de concentration 42 est réalisé venu de matière avec le guide de lumière 32.

On a représenté à la figure 7 une section transversale verticale 16a d'un tronçon de transmission 36 du guide de lumière 32. Le foyer objet principal 26a est ici transversalement située entre la portion périphérique avant 22 et la portion périphérique arrière 24, à l'intérieur de la section élémentaire 16a.

La face arrière 25 comporte ici un logement 50 dans lequel est reçue la diode secondaire 44. Comme représenté à la figure 7, le logement comporte un fond transversal vertical 24a et des parois transversales inférieure 52 et supérieure 54. Le support 46 de la diode secondaire 44 obture le logement 50.

La portion périphérique arrière 24 a ici une forme globalement ellipsoïdale dont le premier foyer est agencé sur la ligne de foyers objets principaux 26a, et dont le second foyer est agencé sur la diode secondaire 44.

Le fond 24a du logement 50 forme ici un dioptre convergent qui est destiné à concentrer les rayons lumineux Ra émis par la diode secondaire 44 vers le foyer objet principal 26a.

Les rayons lumineux RI traversant les parois 52 et 54 du logement 50 ne sont pas réfractés.

Ainsi, dans ce mode de réalisation, la portion périphérique arrière 24 forme le réflecteur 42b qui concentre les rayons lumineux RI, tandis que les rayons lumineux Ra sont concentrés sur la ligne de foyers objets principaux 26a par le fond 24a du logement 50 qui forme ici lentille 42a.

De façon que les sections 16 des tronçons de diffusion 34, et les section élémentaires 16a des tronçons de transmission 36 soient de forme globalement identiques, il est nécessaire que la ligne de diffusion 26 soit située à l'intérieur de la section transversale verticale 16 de façon à être confondue avec la ligne de foyers objets principaux 26a, par exemple au moyen d'une encoche 52 réalisée dans la face périphérique arrière 24 du guide de lumière 32, comme représenté à la figure 8.

Selon une variante de l'invention, la ligne directrice 18 a une forme curviligne.

## Revendications

1. Dispositif d'éclairage ou de signalisation, notamment pour un véhicule automobile, comprenant :
- un guide de lumière (32) linéaire et transparent qui est engendré par le déplacement d'une section élémentaire (16a) transversale verticale globalement circulaire selon une ligne directrice (18), du type dans lequel le contour (20) de la section élémentaire (16a) comprend une portion périphérique arrière (24) à partir de laquelle s'étend un axe optique (28) transversal qui traverse diamétralement la section élémentaire (16a) jusqu'à une portion périphérique avant d'éclairage (22), et dans lequel le déplacement de la portion périphérique arrière (24) forme une face périphérique arrière (25), et le déplacement de la portion périphérique avant (22) forme une face périphérique avant (23) ;
- une source lumineuse principale (30) qui émet des rayons lumineux dans le guide de lumière (32) à travers au moins une face transversale d'extrémité (14) du guide de lumière (32) ;
du type dans lequel les rayons lumineux (Rc) se propagent dans le guide de lumière (32) par réflexions totales successives sur le contour (20) selon la direction générale de la ligne directrice (18),
**caractérisé en ce qu'**il comporte au moins une source lumineuse secondaire (44) qui est située en regard de la face périphérique arrière (25) selon l'axe optique (28) à l'arrière d'un tronçon (36) associé du guide de lumière (32), et qui émet des rayons lumineux (Ra, Rl) vers l'avant de manière qu'ils pénètrent dans le tronçon (36) par sa face périphérique arrière (25), et de manière que les rayons lumineux (Ra, Rl) émergent du tronçon (36) par sa face périphérique avant (23) selon la direction moyenne de l'axe optique (28).

2. Dispositif d'éclairage selon la revendication précédente, **caractérisé en ce que** la face périphérique avant (23) du tronçon (32) a une forme telle que les rayons lumineux (Ra, RI) issus de la source secondaire (44) émergent par la face périphérique avant (23) du tronçon (36) de façon globalement parallèle à l'axe optique (28).

3. Dispositif d'éclairage selon la revendication précédente, **caractérisé en ce que** la portion périphérique avant (22) de la section élémentaire (16a) a la forme d'un dioptre qui comporte un foyer objet principal (26a) agencé sensiblement sur chaque axe optique (28), le déplacement de la section élémentaire (16a) engendrant une ligne de foyers objets principaux (26a) s'étendant dans le tronçon (32) parallèlement à la ligne directrice (18) ;
et **en ce qu'**il comporte un système de concentration (42) des rayons lumineux (Ra, Rl) issus de la source secondaire (44) vers la ligne de foyers objets principaux (26a).

4. Dispositif d'éclairage selon la revendication précédente, **caractérisé en ce que** le système de concentration (42) comporte un réflecteur (42b) de profil transversal globalement ellipsoïdal dont le foyer objet est agencé à la source secondaire (44) et dont le foyer image est agencé au foyer objet principal (26a) de la section élémentaire (16a) associée.

5. Dispositif d'éclairage selon l'une quelconque des revendications 3 ou 4, **caractérisé en ce que** le système de concentration (42) comporte un dioptre arrière (42a) qui est agencé entre la source lumineuse secondaire (44) et le foyer objet principal (26a), et qui concentre les rayons lumineux (Ra) issus de la source lumineuse secondaire (44) sur la ligne de foyers objets principaux (26a).

6. Dispositif d'éclairage selon l'une quelconque des revendications 4 ou 5, **caractérisé en ce que** le réflecteur (42b) a un profil longitudinal formant globalement une parabole dont le foyer objet est agencé à la source lumineuse secondaire (44) et qui réfléchit vers l'avant les rayons lumineux (RI) émis par la source lumineuse secondaire (44) de façon globalement parallèle à l'axe optique (28).

7. Dispositif d'éclairage selon l'une quelconque des revendications 3 à 6, **caractérisé en ce que** le foyer objet principal (26a) est agencé sensiblement sur la portion périphérique arrière (24) de la section élémentaire (16a).

8. Dispositif d'éclairage selon l'une quelconque des revendications 3 à 5, **caractérisé en ce que** le système de concentration (42) est réalisé venu de matière avec le guide de lumière (32).

9. Dispositif d'éclairage selon la revendication précédente, **caractérisé en ce que** la face périphérique arrière (25) du tronçon (36) comporte un logement (50) qui reçoit la source secondaire de lumière (44).

10. Dispositif d'éclairage selon la revendication précédente, **caractérisé en ce que** la face périphérique arrière (25) du tronçon (36) forme le réflecteur (42b) de profil transversal vertical ellipsoïdal, et **en ce que** des parois inférieure (52) et supérieure (54) du logement (50) ont sensiblement la forme d'un dioptre dont le centre optique est agencé à la source lumineuse secondaire (44) de façon que des rayons lumineux (Rl) issus de la source lumineuse secondaire traversent lesdites parois globalement en ligne droite.

11. Dispositif d'éclairage selon l'une quelconque des revendications 9 ou 10, **caractérisé en ce que** le fond (24a) du logement (50) forme le dioptre arrière.

## Claims

1. Lighting or signalling device, in particular for a motor vehicle, comprising:
- a transparent linear light guide (32) which is generated by the displacement of a vertical transverse elementary section (16a) which is globally circular according to a guiding line (18), of the type wherein the contour (20) of the elementary section (16a) comprises a rear peripheral portion (24) from which there extends a transverse optical axis (28) which passes through the elementary section (16a) diametrically, as far as a front peripheral lighting portion (22), and wherein the displacement of the rear peripheral portion (24) forms a rear peripheral surface (25), and the displacement of the front peripheral portion (22) forms a front peripheral surface (23);
- a main source of light (30), which emits rays of light in the light guide (32) via at least one transverse end surface (14) of the light guide (32);
of the type wherein the rays of light (Rc) are propagated in the light guide (32) by total successive reflections on the contour (20), according to the general direction of the guiding line (18),
**characterised in that** it comprises at least one secondary source of light (44) which is situated opposite the rear peripheral surface (25), according to the optical axis (28) at the rear of an associated section (36) of the light guide (32), and which emits rays of light (Ra, RI) forwards, such that they penetrate into the section (36) via its rear peripheral surface (25), and such that the rays of light (Ra, RI) emerge from the section (36) via its front peripheral surface (23), according to the mean direction of the optical axis (28).

2. Lighting device according to the preceding claim, **characterised in that** the front peripheral surface (23) of the section (32) has a form such that the rays of light (Ra, RI) which are obtained from the secondary source (44) emerge from the front peripheral surface (23) of the section (36), in a manner globally parallel to the optical axis (28).

3. Lighting device according to the preceding claim, **characterised in that** the front peripheral portion (22) of the elementary section (16a) has the form of a dioptre which comprises a main target focal point (26a), which is arranged substantially on each optical axis (28), with the displacement of the elementary section (16a) generating a line of main target focal points (26a) which extends in the section (32), parallel to the guiding line (18);
and **in that** it comprises a system (42) for concentration of the rays of light (Ra, RI) obtained from the secondary source (44) towards the line of main target focal points (26a).

4. Lighting device according to the preceding claim, **characterised in that** the concentration system (42) comprises a reflector (42b) with a globally ellipsoidal transverse profile, the target focal point of which is arranged at the secondary source (44), and the image focal point of which is arranged at the main target focal point (26a) of the associated elementary section (16a).

5. Lighting device according to either of claims 3 or 4, **characterised in that** the concentration system (42) comprises a rear dioptre (42a) which is arranged between the secondary source of light (44) and the main target focal point (26a), and which concentrates the rays of light (Ra) obtained from the secondary source of light (44) on the line of main target focal points (26a).

6. Lighting device according to either of claims 4 or 5, **characterised in that** the reflector (42b) has a longitudinal profile which globally forms a parabola, the target focal point of which is arranged at the secondary source of light (44), and which reflects forwards the rays of light (RI) emitted by the secondary source of light (44) in a manner globally parallel to the optical axis (28).

7. Lighting device according to any one of claims 3 to 6, **characterised in that** the main target focal point (26a) is arranged substantially on the rear peripheral portion (24) of the elementary section (16a).

8. Lighting device according to any one of claims 3 to 5, **characterised in that** the concentration system (42) is produced integrally with the light guide (32).

9. Lighting device according to the preceding claim, **characterised in that** the rear peripheral surface (25) of the section (36) comprises a receptacle (50) which receives the secondary source of light (44).

10. Lighting device according to the preceding claim, **characterised in that** the rear peripheral surface (25) of the section (36) forms the reflector (42b) with an ellipsoidal vertical transverse profile, and **in that** lower (52) and upper (54) walls of the receptacle (50) have substantially the form of a dioptre, the optical centre of which is arranged at the secondary source of light (44) such that the rays of light (RI) obtained from the secondary source of light pass through the said walls globally in a straight line.

11. Lighting device according to either of claims 9 or 10, **characterised in that** the base (24a) of the receptacle (50) forms the rear dioptre.

## Patentansprüche

1. Beleuchtungs- oder Signalgebungsvorrichtung, insbesondere für ein Kraftfahrzeug, mit:
- einem geraden und lichtdurchlässigen Lichtleiter (32), der durch die Verschiebung eines allgemein runden, senkrechten Grundquerschnitts (16a) entlang einer Leitlinie (18) erzeugt wird, des Typs, bei dem der Umfang (20) des Grundquerschnitts (16a) einen hinteren peripheren Abschnitt (24) aufweist, von dem ausgehend sich eine quer verlaufende optische Achse (28) erstreckt, die den Grundquerschnitt (16a) diametral bis zu einem vorderen peripheren Beleuchtungsabschnitt (22) durchquert, und bei dem die Verschiebung des hinteren peripheren Abschnitts (24) eine periphere Rückseite (25) bildet und die Verschiebung des vorderen peripheren Abschnitts (22) eine periphere Vorderseite (23) bildet;
- einer Hauptlichtquelle (30), die Lichtstrahlen durch wenigstens eine quer verlaufende Stirnfläche (14) des Lichtleiters (32) hindurch in den Lichtleiter (32) emittiert;
des Typs, bei dem sich die Lichtstrahlen (Rc) im Lichtleiter (32) durch aufeinanderfolgende Totalreflexionen am Umfang (20) entlang der allgemeinen Richtung der Leitlinie (18) ausbreiten,
**dadurch gekennzeichnet, dass** sie wenigstens eine Zusatzlichtquelle (44) umfasst, die gegenüber der peripheren Rückseite (25) entlang der optischen Achse (28) hinter einem dem Lichtleiter (32) zugeordneten Segment (36) angeordnet ist und die Lichtstrahlen (Ra, RI) so nach vorne emittiert, dass diese in das Segment (36) durch dessen periphere Rückseite (25) eindringen und die Lichtstrahlen (Ra, RI) aus dem Segment (36) durch dessen periphere Vorderseite (23) entlang der mittleren Richtung der optischen Achse (28) austreten.

2. Beleuchtungsvorrichtung nach dem vorhergehenden Anspruch,
**dadurch gekennzeichnet, dass** die periphere Vorderseite (23) des Segments (36) so geformt ist, dass die von der Zusatzlichtquelle (44) abgegebenen Lichtstrahlen (Ra, RI) durch die periphere Vorderseite (23) des Segments (36) allgemein parallel zur optischen Achse (28) austreten.

3. Beleuchtungsvorrichtung nach dem vorhergehenden Anspruch,
**dadurch gekennzeichnet, dass** der vordere periphere Abschnitt (22) des Grundquerschnitts (16a) die Form eines Diopters hat, der einen im Wesentlichen auf jeder optischen Achse (28) angeordneten objektseitigen Hauptbrennpunkt (26a) hat, wobei die Verschiebung des Grundquerschnitts (16a) eine Linie objektseitiger Hauptbrennpunkte (26a) erzeugt, die in dem Segment (36) parallel zur Leitlinie (18) verläuft;
und dass sie ein System (42) zur Bündelung der von der Zusatzlichtquelle (44) abgegebenen Lichtstrahlen (Ra, RI) in Richtung der Linie objektseitiger Hauptbrennpunkte (26a) aufweist.

4. Beleuchtungsvorrichtung nach dem vorhergehenden Anspruch,
**dadurch gekennzeichnet, dass** das Bündelungssystem (42) einen Reflektor (42b) mit allgemein ellipsoidem Querschnittsprofil umfasst, dessen objektseitiger Brennpunkt an der Zusatzlichtquelle (44) angeordnet ist und dessen bildseitiger Brennpunkt im objektseitigen Hauptbrennpunkt (26a) des zugeordneten Grundquerschnitts (16a) angeordnet ist.

5. Beleuchtungsvorrichtung nach einem der Ansprüche 3 oder 4,
**dadurch gekennzeichnet, dass** das Bündelungssystem (42) einen hinteren Diopter (42a) umfasst, der zwischen der Zusatzlichtquelle (44) und dem objektseitigen Hauptbrennpunkt (26a) angeordnet ist und der die von der Zusatzlichtquelle (44) abgegebenen Lichtstrahlen (Ra) auf der Linie objektseitiger Hauptbrennpunkte (26a) bündelt.

6. Beleuchtungsvorrichtung nach einem der Ansprüche 4 oder 5,
**dadurch gekennzeichnet, dass** der Reflektor (42b) ein allgemein eine Parabel bildendes Längsprofil hat, dessen objektseitiger Brennpunkt an der Zusatzlichtquelle (44) angeordnet ist und der die von der Zusatzlichtquelle (44) emittierten Lichtstrahlen (RI) allgemein parallel zur optischen Achse (28) nach vorne reflektiert.

7. Beleuchtungsvorrichtung nach einem der Ansprüche 3 bis 6,
**dadurch gekennzeichnet, dass** der objektseitige Hauptbrennpunkt (26a) im Wesentlichen auf dem hinteren peripheren Abschnitt (24) des Grundquerschnitts (16a) angeordnet ist.

8. Beleuchtungsvorrichtung nach einem der Ansprüche 3 bis 5,
**dadurch gekennzeichnet, dass** das Bündelungssystem (42) materialeinheitlich mit dem Lichtleiter (32) ausgeführt ist.

9. Beleuchtungsvorrichtung nach dem vorhergehenden Anspruch,
**dadurch gekennzeichnet, dass** die periphere Rückseite (25) des Segments (36) eine Aufnahme (50) aufweist, die die Zusatzlichtquelle (44) aufnimmt.

10. Beleuchtungsvorrichtung nach dem vorhergehenden Anspruch,
**dadurch gekennzeichnet, dass** die periphere Rückseite (25) des Segments (36) den Reflektor (42b) mit ellipsoidem senkrechtem Querschnittsprofil bildet, und dass die untere (52) und die obere (54) Wand der Aufnahme (50) im Wesentlichen die Form eines Diopters haben, dessen optischer Mittelpunkt an der Zusatzlichtquelle (44) so angeordnet ist, dass die von der Zusatzlichtquelle abgegebenen Lichtstrahlen (RI) diese Wände allgemein geradlinig durchqueren.

11. Beleuchtungsvorrichtung nach einem der Ansprüche 9 oder 10,
**dadurch gekennzeichnet, dass** der Boden (24a) der Aufnahme (50) den hinteren Diopter bildet.
